# EUROPÄISCHE PATENTSCHRIFT

(11) **EP 0 734 889 B1**
(45) Veröffentlichungstag und Bekanntmachung des Hinweises auf die Patenterteilung: **17.11.1999**
(21) Anmeldenummer: 96103634.0
(22) Anmeldetag: 08.03.1996
(51) Int. Cl.: B60G 15/06

(54) **Oberes Federbeinstützlager für Radaufhängungen in einem Kraftfahrzeug**
Upper strut bearing for motor vehicle suspensions
Fixation supérieure pour jambe de suspension de véhicule à moteur

(30) Priorität: 30.03.1995 DE 19511642
(43) Veröffentlichungstag der Anmeldung: 02.10.1996
(73) Patentinhaber: Lemförder Metallwaren AG, 49448 Lemförde (DE)
(72) Erfinder: Kammel, Helmut, 49401 Damme (DE); Siemer, Hubert, 49413 Dinklage (DE); Jördens, Ernst-Günther, 49401 Damme (DE)

(56) Entgegenhaltungen:
- EP-A- 0 039 133
- EP-A- 0 136 023
- DE-A- 4 326 197
- US-A- 5 308 104

## Beschreibung

Die Erfindung bezieht sich auf ein oberes Federbeinstützlager für Radaufhängungen in Kraftfahrzeugen nach dem Oberbegriff des Patentanspruches 1.

Federbeinstützlager mit diesen Ausbildungsmerkmalen entsprechen dem von den Herstellern praktizierten Stand der Technik und gehen beispielsweise aus der EP 0 136 023 A2 oder der US 5,308,104 hervor. Bei diesen bekannten Ausführungen erstrecken sich der Außenrand des im vertikalen Schnitt topfförmigen Gehäuses und der Außenrand der Deckelplatte im wesentlichen radial. Sie bilden somit keine radial wirksame Führung für das obere, sich gegen die Unterseite des Gehäuserandes abstützende Ende der Schraubenfeder des Federbeines und auch keinen Stützmantel für den Federpuffer aus Gummi oder einem vergleichbaren elastomeren Werkstoff, so daß dieser bei höherer Belastung nach außen verquetscht werden kann und daher eine entsprechende Materialsteifigkeit aufweisen muß, die dem angestrebten Komfort entgegensteht.

Es ist Aufgabe der Erfindung, ein solches oberes Federbeinstützlager in der Wirkung zu verbessern, in der Stabilität zu erhöhen und mit weniger Bauteilen kostengünstiger herstellen zu können.

Die Erfindung löst diese Aufgabe durch Ausbildungsmerkmale nach dem Patentanspruch 1.

Durch die einteilige Ausbildung des Gehäuses mit dem an seiner Unterseite einstückig angeformten Teil zur Aufnahme des oberen Dämpferendes und zu dessen radialer Führung werden erhebliche Herstellungskosten eingespart. Erreicht wird aber gleichzeitig auch eine größere Stabilität des Gehäuses, so daß bei gleicher Belastungsmöglichkeit geringere Wandstärken gewählt oder umgekehrt höhere Belastungen aufgenommen werden können. Es entfällt ein gesonderter Herstellungsvorgang für den bisher üblichen unteren Kragenrand und ein weiterer Arbeitsgang für dessen Verbindung mit dem Gehäuse.

Weiterhin ist das Gehäuse mit einer Deckelplatte verbunden, die einen nach unten über den Federpuffer hinausreichenden Mantelring aufweist, in den das sich gegen den Pufferring abstützende obere Ende der Schraubenfeder des Federbeines hineinreicht. Auch dies ergibt eine wesentliche Verbesserung der Stabilität des oberen Federbeinlagers und gleichzeitig eine radial wirksame Führung für das obere Ende der Schraubenfeder des Federbeines. Außerdem wird der Pufferring aus Gummi oder dergleichen an seiner äußeren Mantelseite umschlossen, so daß eine seitliche Verquetschung des Werkstoffes des Pufferringes nicht mehr vorkommen kann. Der Werkstoff kann daher mit einer geringeren Steifigkeit ausgewählt werden oder entsprechend höhere Belastungen übertragen. Es ergibt sich auch die Möglichkeit, den Faltenbalg, welcher normalerweise den Dämpfer schützend umschließt, mit seinem oberen Ende innerhalb des an der Deckelplatte ausgebildeten Mantelringes zu befestigen, und zwar entweder als ein vom Pufferring unabhängiges Bauteil oder als ein mit dem Pufferring einstückig ausgebildetes Bauteil.

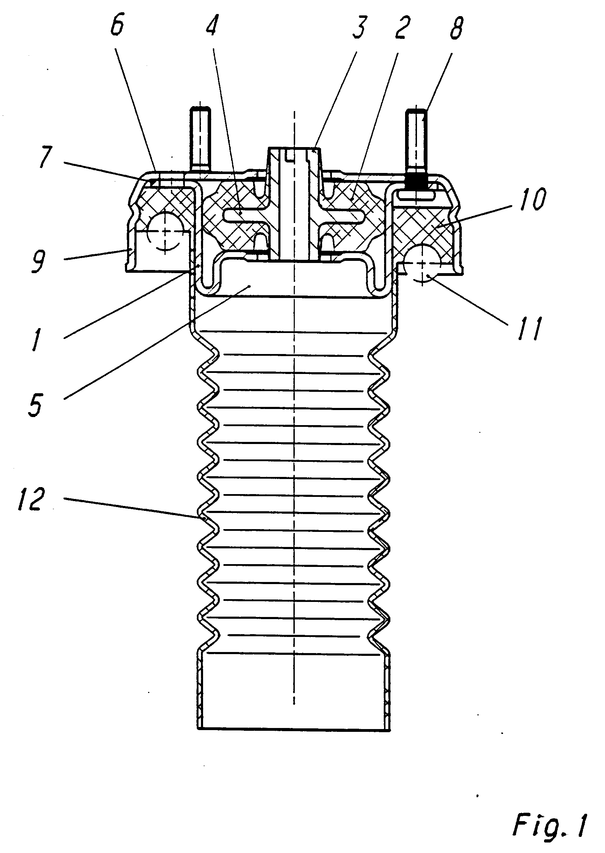

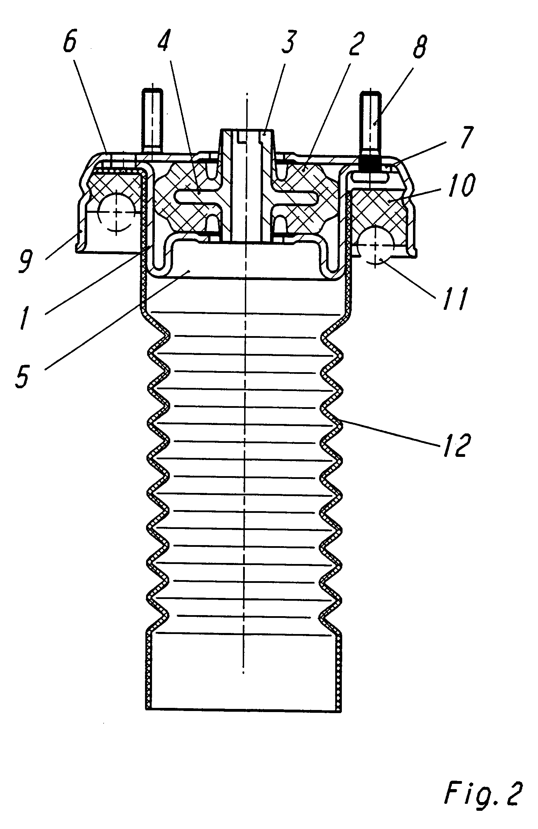

In der Zeichnung sind zwei Ausführungsbeispiele einer erfindungsgemäßen Ausbildung in den Figuren 1 und 2 jeweils in einem vertikalen Schnitt dargestellt.

In den Ausführungsbeispielen besteht das obere Federbeinlager aus einem im vertikalen Schnitt in einer durch die Mittelachse des Federbeines gelegten Ebene topfförmigen Metallgehäuse 1, einem in diesem Gehäuse angeordneten Gummipuffer 2 und einem mit dem in der Zeichnung nicht dargestellten Dämpfer verbindbaren Tragstück 3, welches radial gerichtete Vorsprünge 4 aufweist, die in den Werkstoff des Gummipuffers 2 hineinragen. An der Unterseite des Gehäuses 1 ist ein Kragenrand 5 einstückig mit der Wandung des Gehäuses 1 aus Blech geformt. In diesen Kragenrand 5 ragt das obere Ende des nicht dargestellten Dämpfers hinein, so daß es dadurch radial geführt und gehalten ist. Die Verbindung des Tragstückes 3 mit dem Dämpfer erfolgt durch die Bohrung in dem Tragstück 3. An der Oberseite wird das Gehäuse 1 durch eine Deckelplatte 6 abgeschlossen, die das Tragstück 3 mit einem Spielraum umgibt, so daß das Tragstück 3 unter Ausnutzung eines entsprechenden Spielraumes im Boden des Gehäuses 1 kardanisch gegenüber dem Gehäuse beweglich ist. Die sich radial erstreckenden Vorsprünge 4 weisen bereichsweise Ausnehmungen auf. Hierdurch läßt sich eine kardanisch verringerte Kennung in der Belastungsebene erreichen. In herkömmlicher Weise wird der Gummipuffer 2 in dem Gehäuse 1 mit der Deckelplatte 6 eingespannt. Der radial nach außen gerichtete Rand 7 des topfförmigen Gehäuses 1 und die Deckelplatte 6 sind miteinander verstemmt. Ermöglicht wird dadurch eine Endbehandlung sowohl des Gehäuses 1 als auch der Deckelplatte 6 vor der Montage. Beide Bauteile können somit bereits vor der Verbindung oberflächenbehandelt, insbesondere lackiert, sein. Bei einer Verschweißung früherer Bauart ist dies nicht möglich. An der Deckelplatte befinden sich Befestigungselemente für die Verbindung mit einem Bauteil des Kraftfahrzeuges. Dargestellt sind Befestigungsschrauben 8, die Bohrungen sowohl des radial gerichteten Gehäuseflansches 7 als auch der Deckelplatte 6 durchdringen. Die Deckelplatte 6 geht am Außenrand in einen Mantelring 9 über, der nach unten gerichtet ist und über einen Federpuffer 10 hinausreicht, gegen den sich das obere Ende der Schraubenfeder 11 des Federbeines abstützt. Im Ausführungsbeispiel entsprechend Figur 1 ist ein den Dämpfer schützend umgebender Balg 12 einstückig mit dem Federpuffer 10 ausgebildet, so daß die Befestigung seines Oberendes durch den Pufferring 10 bewirkt wird. Bei dem Ausführungsbeispiel entsprechend Figur 2 weist das obere Ende des Dichtungsbalgs 12 einen nach außen gerichteten Flansch auf, der zwischen dem Pufferring 10 und dem Flansch 7 des Gehäuses eingespannt ist. Aus beiden Darstellungen wird deutlich, daß der Pufferring 10 und gegebenenfalls auch der radiale Flansch des Balgs 12 im Bereich der Schrauben 8 für die Befestigung des oberen Federbeinlagers an einem Kraftfahrzeugteil Ausnehmungen aufweisen kann.

## Patentansprüche

1. Oberes Federbeinstützlager für Radaufhängungen in einem Kraftfahrzeug, bestehend aus:
- einem im vertikalen Schnitt topfförmigen Metallgehäuse (1),
- einem in diesem Gehäuse angeordneten Gummipuffer (2),
- einem mit einem Dämpfer verbindbaren Tragstück (3), welches mit sich radial erstreckenden Vorsprüngen (4) in den fest mit ihm verbundenen Gummipuffer (2) hineinragt, wobei ein sich radial erstreckender Gehäuserand (7) ein Widerlager für einen ringförmigen Federpuffer (10) bildet, gegen den sich das obere Ende einer den Dämpfer umgebenden Schraubenfeder (11) abstützt,
- einer an einem Kraftfahrzeugbauteil befestigbaren, den Gummipuffer (2) an seiner Oberseite abdeckenden, mit dem Metallgehäuse (1) verbundenen Deckelplatte (6), wobei sich an der Unterseite des Gehäuses (1) ein den Dampfer radial führender Kragenrand (5) befindet und das Metallgehäuse (1) mit diesem Kragenrand (5) einstückig aus Blech geformt ist,
dadurch gekennzeichnet, daß
die Deckelplatte (6) einen nach unten gerichteten, über den Federpuffer (10) hinausreichenden Mantelring (9) bildet, in den das sich gegen den Pufferring (10) abstützende, obere Ende der Schraubenfeder (11) des Federbeines hineinreicht, wobei das Metallgehäuse (1) mit der Deckelplatte (6) verstemmt ist.

2. Oberes Federbeinlager nach Anspruch 1,
dadurch gekennzeichnet,
daß der sich radial erstreckende Vorsprung (4) bereichsweise Ausnehmungen aufweist.

## Claims

1. Upper strut support bearing for wheel suspension systems in a motor vehicle, comprising:
- a metal housing (1), which is pot-shaped in vertical section,
- a rubber buffer (2) disposed in said housing,
- a carrying piece (3), which is connectable to a damper and projects with radially extending projections (4) into the rubber buffer (2) firmly connected thereto, wherein a radially extending housing edge (7) forms an abutment for an annular spring buffer (10), against which the upper end of a helical spring (11) surrounding the damper is supported,
- a cover plate (6), which is fastenable to a motor vehicle component, covers the top of the rubber buffer (2) and is connected to the metal housing (1), wherein a collar edge (5) for radially guiding the damper is situated at the underside of the housing (1) and the metal housing (1) is formed integrally with said collar edge (5) from sheet metal,
characterized in that
the cover plate (6) forms a downward-directed casing ring (9), which extends beyond the spring buffer (10) and into which the upper end of the helical spring (11) of the strut extends, which is supported against the annular buffer (10), wherein the metal housing (1) is caulked to the cover plate (6).

2. Upper strut bearing according to claim 1,
characterized in
that in sections the radially extending projection (4) has recesses.

## Revendications

1. Palier supérieur d'une jambe de force à ressort pour des suspensions de roues d'un véhicule automobile, constitué:
- d'un boîtier métallique (1) en forme de coupelle en coupe verticale,
- d'un tampon en caoutchouc (2) disposé dans ce boîtier,
- d'une pièce de support (3) qui peut être reliée à un amortisseur et qui s'engage dans le tampon en caoutchouc (2) relié fixement à celle-ci, par des saillies (4) s'étendant radialement, une paroi (7) du boîtier, qui s'étend radialement, formant une butée pour un tampon élastique (10) annulaire contre lequel prend appui l'extrémité supérieure d'un ressort hélicoïdal (11) entourant l'amortisseur,
- d'une plaque formant couvercle (6) à fixer sur un composant du véhicule, recouvrant le tampon en caoutchouc (2) sur sa face supérieure et reliée au boîtier métallique (1), un bord de collet (5), qui guide radialement l'amortisseur, se trouvant sur la face inférieure du boîtier (1) et le boitier métallique (1) étant formé d'un seul tenant avec ce bord de collet (5) dans une tôle,
caractérisé en ce que
la plaque formant couvercle (6) forme un anneau d'enveloppe (9) dirigé vers le bas, s'étendant au-delà du tampon élastique (10), dans lequel s'engage l'extrémité supérieure du ressort hélicoïdal (11) de la jambe de force à ressort, laquelle prend appui contre le tampon élastique (10), le boîtier métallique (1) étant maté avec la plaque formant couvercle (6).

2. Palier supérieur de jambe de force à ressort selon la revendication 1,
caractérisé
en ce que la saillie (4) qui s'étend radialement présente par endroits des évidements.
